Europäisches Patentamt

European Patent Office

Office européen des brevets

(19)

(11) Veröffentlichungsnummer: **0 209 525**
**B1**

(12) **EUROPÄISCHE PATENTSCHRIFT**

(45) Veröffentlichungstag der Patentschrift: **13.06.90**

(21) Anmeldenummer: **85904217.8**

(22) Anmeldetag: **05.09.85**

(86) Internationale Anmeldenummer:
**PCT/CH85/00129**

(87) Internationale Veröffentlichungsnummer:
**WO 86/04462 31.07.86 Gazette 86/17**

(51) Int. Cl.⁵: **H 02 B 5/00**

(54) **ELEKTRISCHE UNTERSTATION.**

(30) Priorität: **29.01.85 IT 1927385**

(43) Veröffentlichungstag der Anmeldung:
**28.01.87 Patentblatt 87/05**

(45) Bekanntmachung des Hinweises auf die
Patenterteilung:
**13.06.90 Patentblatt 90/24**

(84) Benannte Vertragsstaaten:
**BE CH DE FR GB LI NL SE**

(56) Entgegenhaltungen:
**DE-C- 915 357**
**US-A-2 531 694**
**US-A-4 469 954**

**Mécanique Electricité, Band 47, Nr. 165, April
1983, Paris (FR) M.P. Cherrier et al.:
"Alimentation électrique de la mine d'Arjuzanx
(Landes)" Seiten 48,49, siehe Seiten 48,49**

(73) Patentinhaber: **BBC Brown Boveri AG
Haselstrasse
CH-5401 Baden (CH)**

(72) Erfinder: **ACCORNERO, Luigi
Via dei Bognetti 9
I-20141 Milano (IT)**

Courier Press, Leamington Spa, England.

EP 0 209 525 B1

**Beschreibung**

Bei der Erfindung wird ausgegangen von einer elektrischen Unterstation gemäss dem Oberbegriff von Patentanspruch 1.

Eine derartige Unterstation ist beispielsweise aus der Zeitschrift "Mécanique Electricité, Band 47, Nr. 165, April 1963, Paris" bekannt. Die bekannte Unterstation weist ein auf einem Schlitten montiertes Gestell auf. Dieses Gestell trägt elektromecanische Baugruppen, wie Leistungs- und Trennschalter sowie Transformatoren, die ab Werk montiert und betriebsbereit miteinander verkabelt sind. Der Schlitten weist Anschlusslaschen auf, welche das Verschieben der Unterstation auf ein Transportmittel ermöglichen. Eine derartige Unterstation benötigt ein vergleichsweise aufwendiges Gestell zum Halten der elektromechanischen Baugruppen und ist zudem lediglich für die Verteilung von Niederspannung vorgesehen.

Aus der DE—C—915357 ist eine elektrische Unterstation mit einem fahrbaren Untergestell bekannt, auf dem elektromechanische Baugruppen, wie Trenn- und Leistungsschalter, Strom- und Spannungswandler und Sammelschienen, befestigt sind. Auch diese Baugruppen sind ab Werk montiert und betriebsbereit miteinander verkabelt. Bei dieser Unterstation bilden die Sammelschienen einen Bestandteil des fahrbaren Untergestells und sind daher gekapselt ausgebildet. Eine solche Unterstation ist vergleichsweise aufwendig, da sie zum einen teure gekapselte elektromechanische Baugruppen benötigt und da zum anderen des fahrbare Untergestell nicht für weitere Transporte eingesetzt werden kann. Darüber hinaus kommt hinzu, dass diese Unterstation bei Anwendungen im Hochspannungsbereich beträchtliche Abmessungen aufweist. Hierdurch wird die Fahrt zum Aufstellungsort erheblich erschwert.

Der Erfindung, wie sie in Patentanspruch 1 definiert ist, liegt die Aufgabe zugrunde, eine Unterstation der eingangs genannten Art zu schaffen, welche auch bei Ausbildung als umfangreich dimensionierte und nach kundenspezifischen Vorgaben projektierte Hochspannungsanlage in rascher und wirtschaftlicher Weise errichtet und gewartet werden kann.

Die Unterstation nach der Erfindung zeichnet sich dadurch aus, dass sie hinsichtlich der Übersichtlichkeit und der Wartungsbereitschaft die Vorteile einer stationären Unterstation aufweist mit dem zusätzlichen positiven Aspekt, dass sie auch in schwierigen Geländen leicht aufgestellt und bei Bedarf rasch verlegt werden kann. Diese ist vor allem bedingt durch Anordnung der Unterstation nach der Erfindung auf vergleichsweise leicht zu transportierenden Plattformen, von denen eine erste alle elektromechanischen Baugruppen trägt, welche als Schaltanlage zwischen einer hochspannungsführenden Eingangsleitung und einer Sammelschiene der Unterstation liegen, mindestens eine zweite Plattform alle elektromechanischen Baugruppen trägt, welche als Umspannvorrichtung zwischen der hochspannungsführenden Sammelschiene und einem mittelspannungsführenden Abgang liegen, und eine gegebenenfalls vorgesehene dritte Plattform alle elektromechanischen Baugruppen trägt, welche als Buskoppelvorrichtung zwischen zwei Sammelschienen der Unterstation geschaltet sind. Bei Schäden oder Betriebsstörungen der Unterstation können so einzelne Plattformen leicht ausgewechselt werden, indem sie durch Kopplung an ein Rollgestell rasch entfernt und in eine für Reparaturen vorgesehene Werkstatt transportiert werden. Da die zu wartenden elektromechanischen Baugruppen leicht zugänglich und jeweils mittels geeigneten Befestigungsmitteln auf den Plattformen gehalten sind, können sie unter optimaler Einhaltung der Sicherheitsvorschriften für das Bedienungspersonal unter Betriebsbedingungen überprüft und bei Wartungs- und Reparaturarbeiten ersetzt werden.

Von besonderem Vorteil ist es, wenn mindestens eine der Plattformen aus Moduleinheiten zusammengesetzt ist. Solche Moduleinheiten können dann per Helikopter am Bestimmungsort abgesetzt und anschliessend etwa mittels Schraubverbindung leicht zusammengebaut werden.

In der Zeichnung sind Ausführungsbeispiele der Erfindung schematisch dargestellt. Alle für das unmittelbare Verständnis der Erfindung nicht erforderlichen Elemente sind fortgelassen.

Gleiche Elemente sind in den verschiedenen Figuren mit den gleichen Bezugszeichen versehen.

Es zeigt:

Fig. 1 eine Generalansicht einer erfindungsgemäss ausgeführten Unterstation, welche aus mehreren Baugruppen besteht, die ihrerseits auf verschiedenen, betriebsbereiten Plattformen plaziert sind,

Fig. 2 eine Eingangsgruppe einer Unterstation gemäss Fig. 1 mit einer verschiedene Baugruppen aufnehmenden ersten Plattform,

Fig. 3 eine Plattform einer weiteren Ausführungsform der erfindungsgemässen Unterstation, auf der verschiedene elektrische Baugruppen als Sammelschienenkopplungsteil montiert sind, und

Fig. 4 eine zweite Plattform der Unterstation gemäss Fig. 1 mit verschiedenen elektrischen Baugruppen, die der Umspannung und Verteilung des zugeführten Stromes dienen.

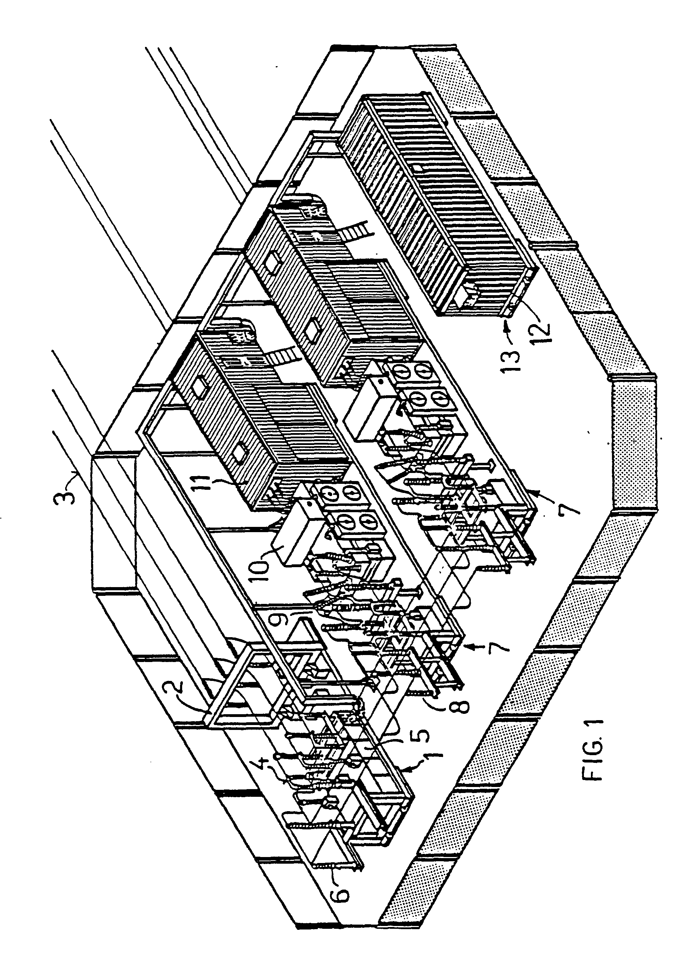

Aus Fig. 1 ist ersichtlich, dass die Plattform 1 verschiedene elektromechanische Baugruppen trägt. Da ist einmal eine Gruppe von Eingangsisolatoren 2, die mit Eingangsleitungen 3 verbunden sind. Dieser Gruppe folgt eine Gruppe von Schaltern 4, eine Gruppe von Strom- und Spannungswandlern 5 und eine Gruppe von Abgangsisolatoren 6. Parallel zur ersten Plattform 1 ist eine weitere Plattform 7 vorgesehen, welche ihrerseits auch Gruppen von Isolatoren 8, Schaltern 9, Transformatoren 10 und eine Kabine 11 trägt. Beispielsweise ist die Kabine 11, welche durchaus die Dimensionen eines Containerhäuschens aufweise kann, für die Unterbringung von Trennschaltern, von Messeinheiten, einer Verkabelungsgruppe für ein Sammelschienenkopplunsteil, eines Hilfstransformers, einer Batterie, von Batterievorräten, einer Kontroll-Schalttafel, eines für die Hilfsdienste ausgelegten Verteilkastens aufgeteilt. Darüber hinaus ist die Kabine 11 mit einem Raum versehen, der dem Bedienungspersonal als Aufenthaltsraum zur Verfügung steht. Selbstverständlich kann die Kabine 11 auch für die Aufnahme anderer Hilfsaggregate eingeteilt werden. Parallel zur zweiten Plattform 7 ist eine dritte Plattform 7 vorgesehen, welche einen ähnlichen Aufbau wie die vorangegangene aufweist. Die nächste Plattform 13 hingegen trägt einzig eine Kabine 12, welche vornehmlich in Aufenthaltsräume, Schlafräume etc. aufgeteilt ist. Wie aus Fig. 1 hervorgeht, sind alle Plattformken 1, 7 und 13 direkt auf dem Boden plaziert; die zu ihrem Transport ankoppelbaren Rollgestellte sind bereits entfernt worden.

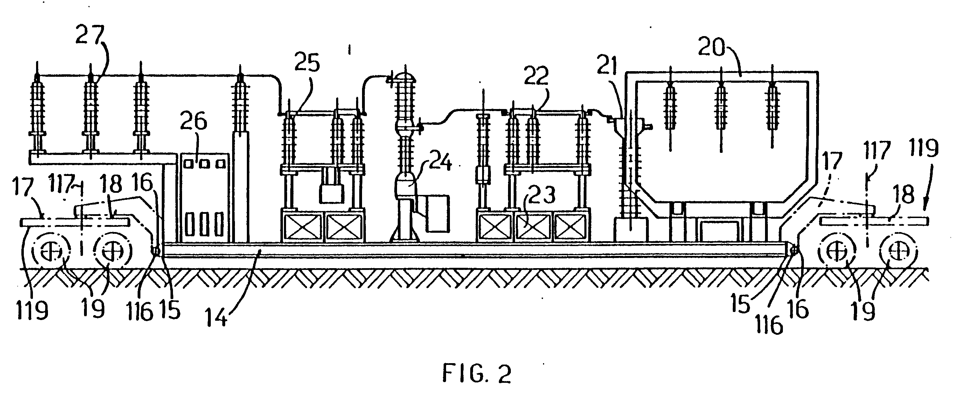

Wie aus Fig. 2 ersichtlich ist, besteht die tragende Struktur der Plattform 14 aus Profil-Stahlträgern. An beiden Kopfenden der Plattform 14 sind Supporte 15 vorgesehen, die als Verbindungsglieder für die angewinkelten beweglichen Anschlusslaschen 17 dienen. Verankerungspunkt der Anschlusslaschen bilden plattformseitig die Bolzen 116, die in den Bohrungen 16 eingefangen sind. Die horizontale Ausladung der Anschlusslasche 17 liegt auf einem Chassis 18, das mit den Rädern 19 das eigentliche Rollgestell 119 bildet. Die Anschlusslaschen 17 sind mit dem Chassis 18 durch Steckbolzen 117 angekoppelt. Auf der aus Fig. 2 ersichtlichen Plattform 14 sind mit den Eingangsleitungen verbundene Isolatoren 20, eine Gruppe von Stromwandlern 21, eine Gruppe von Eingangstrennern 22, Transformatoren 23, eine Gruppe von Leistungsschaltern 24, eine Gruppe von Sammelschienentrennen 25, ein Befehl-, Mess- und Schutz-Schaltschrank 26 und eine Gruppe von Endisolatoren 27 montiert. Alle diese Baugruppen sind mit der Plattform 14 durch lösbare Verbindungen verbunden. Der Anschluss der Baugruppen untereinander und deren Überprüfung auf Funktiontüchtigkeit wird im Werk vorgenommen.

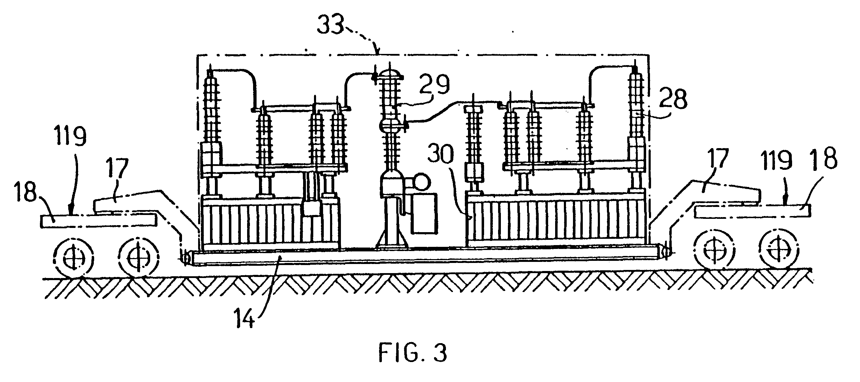

Die Plattform 14 aus Fig. 3, auf der eine Gruppe von Trennschaltern 28, eine von Leistungsschaltern 29 und Umformer 30 plaziert sind, ist kopfseitig, wie bereits in Fig. 2 ersichtlich ist, mit den Anschlusslaschen 17 versehen, die mit dem Chassis 18 des Rollgestells 119 gekoppelt sind. Die Baugruppen können durch eine Schutzabdeckung 33, die in der Figur nur andeutungsweise vermerkt ist, geschützt werden.

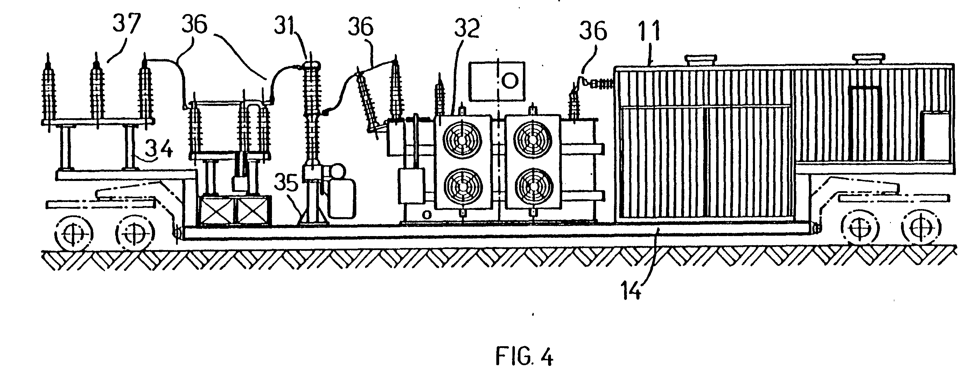

Die Plattform 14 nach Fig. 4 nimmt als Erweiterung, nebst einer Isolatorengruppe 37, einer Gruppe von Leistungsschaltern 31 und einer Transformatorgruppe 32, noch eine Kabine 11 auf, die in verschiedene für das Personal reservierte Räume aufgeteilt wird. Darüber hinaus können dort auch Verteilschränke und andere Hilfsaggregate untergebracht werden. Im weiteren kann die Kabine 11 so ausgelegt werden, dass darin Platz für eine kleine Werkstatt vorgesehen werden kann, die dem Unterhalt der verschiedenen Baugruppen dient.

Wie aus den Figuren 2, 3, 4 hervorgeht, sind alle Elektrogruppen auf Abstützungssäulen 34, Verankerungen 35 und andere Abstützungen gesetzt, die ihrerseits mit der Plattform 14 mittels Schrauben verbunden sind. Die einzelnen Baugruppen sind untereinander bereits ab Werk verkabelt 36. Selbstverständlich kann die ganze Plattform in einen Container eingelassen werden.

## Patentansprüche

1. Elektrische Unterstation mit ab Werk auf mindestens einer verschiebbaren und Mittel für den Anschlusse an ein Rollgestell (119) aufweisenden Plattform (1, 7, 13, 14) montierten und betriebsbereit miteinander verkabelten elektromechanischen Baugruppen, wie Trennschalter (22, 25), Leistungsschalter (24, 29, 31), Abgangsisolatoren (27, 28, 37) und Transformatoren (10, 32), welche zwischen eine auf Hochspannung befindliche Eingansleitung (3) und mindestens einen Abgang geschaltet sind, dadurch gekennzeichnet, dass mindestens zwei Plattformen (1, 7, 14) vorgesehen sind, von denen eine erste (1, 14) der Aufnahmen von Baugruppen dient, die als Eingangsisolatoren (2, 20), Eingangstrenner (22), erste Leistungsschalter (24), erste Sammelschienentrenner (25) und erste Abgangsisolatoren (27) zwischen die Eingangsleitung (3) und eine erste Sammelschiene geschaltet sind, und mindestens eine zweite (7, 14) der Aufnahme von Baugruppen dient, die als zweite Abgangsisolatoren (28, 37), zweite Sammelschienentrenner und zweite Leistungsschalter (29, 31) zwischen die erste Sammelschiene und den mindestens einen Abgang oder eine zweite Sammelschiene geschaltet sind, und dass alle Baugruppen auf Abstützsäulen (34) oder Verankerungen ruhen, welche mit den als standardisierte Paletten ausgebildeten Plattformen (1, 7, 13, 14) verschraubt sind.

2. Unterstation nach Anspruch 1, dadurch gekennzeichnet, dass mindestens eine der mindestens zwei Plattformen (1, 7, 13, 14) aus Moduleinheiten zusammengesetzt ist.

## Revendications

1. Sous-station électrique comportant des sous-groupes électromécaniques, comme des sectionneurs (22, 25), des interrupteurs de puissance (24, 29, 31), des isolateurs de sortie (27, 28, 37) et des transformateurs (10, 32), montés en usine sur au moins une plate-forme (1, 7, 13, 14) déplaçable et présentant des moyens de raccordement à un châssis roulant (119), et câblés entre eux prêts à fonctionner, ces sous-groupes étant connectés entre une ligne d'entrée (3) à haute tension et au moins une sortie, caractérisée en ce qu'au moins deux plates-formes (1, 7, 14) sont prévues, parmi lesquelles une première (1, 14) est destinée à recevoir des sous-groupes qui sont connectés en tant qu'isolateurs d'entrée (2, 20), sectionneurs d'entrée (22), premiers interrupteurs de puissance (24), premiers sectionneurs de barres omnibus (25) et premiers isolateurs de sortie (27) entre la ligne d'entrée (3) et une première barre omnibus, et au moins une deuxième (7, 14) est destinée à recevoir des sous-groupes qui sont connectés en tant que seconds isolateurs de sortie (28, 37), seconds sectionneurs de barres omnibus et seconds interrupteurs de puissance (29, 31) entre la première barre omnibus et ladite au moins une sortie ou une seconde barre omnibus, et que tous les sous-groupes sont posés sur des colonnes de support (34) ou des éléments d'ancrage qui sont vissés aux plates-formes (1, 7, 13, 14) qui ont la forme de palettes standard.

2. Sous-station suivant la revendication 1, caractérisée en ce qu'au moins une des au moins deux plates-formes (1, 7, 13, 14) est composée d'unités modulaires.

**Claims**

1. Electric substation with electromechanical subassemblies, such as isolating switches (22, 25), circuit breakers (24, 29, 31), outgoing insulators (27, 28, 37) and transformers (10, 32), which are mounted ex works on at least one movable platform (1, 7, 13, 14) having means for connection to a roller frame (119), are cabled to one another ready for operation, and are connected between an input line (3) connected to high voltage and at least one outgoing section, characterized in that at least two platforms (1, 7, 14) are provided of which a first (1, 14) serves to accommodate subassemblies that are connected as input insulators (2, 20), input isolators (22), first circuit breakers (24), first bus isolators (25) and first outgoing insulators (27) between the input line (3) and a first busbar, and at least a second (7, 14) serves to accommodate subassemblies that are connected as second outgoing insulators (28, 37), second bus isolators and second circuit breakers (29, 31) between the first busbar and the at least one outgoing section or a second busbar, and in that all subassemblies rest on supporting columns (34) or anchorages, which are screwed to the platforms (1, 7, 13, 14) which are constructed as standardized pallets.

2. Substation according to Claim 1, characterized in that at least one of the at least two platforms (1, 7, 13, 14) is composed of modular units.

FIG. 1

FIG. 2

FIG. 3

EP 0 209 525 B1

FIG. 4